# EUROPÄISCHE PATENTANMELDUNG

(11) **EP 3 744 453 A1**
(43) Veröffentlichungstag der Anmeldung: **02.12.2020**
(21) Anmeldenummer: 20176012.1
(22) Anmeldetag: 22.05.2020
(51) Int. Cl.: B23C 5/10, B23C 5/28

(54) **FRÄSWERKZEUG MIT ZENTRIERWIRKUNG**

(30) Priorität: 31.05.2019 DE 102019114703
(71) Anmelder: Hofmann & Vratny OHG, 85617 Assling (DE)
(72) Erfinder: Vratny, Andreas, 85617 Aßling (DE)
(74) Vertreter: Beckord & Niedlich Patentanwälte PartG mbB

(57) **Zusammenfassung**

Ein Fräswerkzeug mit einem im Wesentlichen zylindrischen Grundkörper (1) mit einer Drehachse, mit einem bis zu einem ersten Ende des Fräswerkzeugs reichenden Schaftabschnitt zum Einspannen des Fräswerkzeugs in einer Bearbeitungsmaschine, mit einem bis zu dem anderen Ende des Fräswerkzeugs reichenden und einem dem Schaftabschnitt gegenüberliegenden Fräsabschnitt (3), mit einer Stirnseite (4) des Fräsabschnitts (3), die mindestens eine von der Drehachse zum Umfang verlaufende Stirnschneide (5) aufweist, mit einem der Drehachse näher liegenden inneren Schneidenabschnitt (8) der Stirnschneide (5), und mit einem der Drehachse ferner liegenden äußeren Schneidenabschnitt (9) der Stirnschneide (5), wobei der innere Schneidenabschnitt (8) zur Drehachse hin stärker abfällt als der äußere Schneidenabschnitt (9), wird dadurch weitergebildet, dass der äußere Schneidenabschnitt (9) mit einem Radius (R2) in den inneren Schneidenabschnitt (8) übergeht.

## Beschreibung

Die Erfindung betrifft ein Fräswerkzeug mit einem im Wesentlichen zylindrischen Grundkörper mit einer Drehachse, mit einem bis zu einem ersten Ende des Fräswerkzeugs reichenden Schaftabschnitt zum Einspannen des Fräswerkzeugs in einer Bearbeitungsmaschine, mit einem bis zu dem anderen Ende des Fräswerkzeugs reichenden und einem dem Schaftabschnitt gegenüberliegenden Fräsabschnitt, mit einer Stirnseite bzw. Stirnfreifläche des Fräsabschnitts, die mindestens eine von der Drehachse zum Umfang verlaufende Stirnschneide aufweist, die in eine umfangseitig in einem Schraubengang verlaufende Frässchneide übergeht, mit einem der Drehachse näher liegenden, insbesondere bis zur Drehachse hin reichenden inneren Schneidenabschnitt der Stirnschneide und mit einem der Drehachse ferner liegenden, insbesondere bis zum Umfang hin reichenden äußeren Schneidenabschnitt der Stirnschneide. Das Fräswerkzeug ist insbesondere als Tauchfräser einsetzbar.

Die DE 10 2016 203 128 B3 zeigt ein Fräswerkzeug mit einem Grundkörper, einer Mittelachse und einer Stirnseite, wobei wenigstens zwei an der Stirnseite des Grundkörpers angeordnete, geometrisch definierte erste Stirnschneiden jeweils einen ersten, der Mittelachse zugewandten Schneidenabschnitt aufweisen. Das Fräswerkzeug zeichnet sich dadurch aus, dass die ersten Schneidenabschnitte der wenigstens zwei Stirnschneiden zu der Mittelache hin ansteigend ausgebildet sind, sodass sie eine Zentrierspitze bilden, und dass die Zentrierspitze im Vergleich zu einem axial äußersten Punkt der wenigstens zwei ersten Stirnschneiden in axialer Richtung zurückgesetzt ist.

Es ist eine Aufgabe der vorliegenden Erfindung, ein Fräswerkzeug anzugeben, das über eine alternative Zentriervorrichtung verfügt.

Diese Aufgabe wird bei dem eingangs genannten Fräswerkzeug erfindungsgemäß dadurch gelöst, dass der innere Schneidenabschnitt zur Drehachse hin und damit von der Stirnfläche weg mit einer Neigung um einen Winkel α stärker abfällt als der äußere Schneidenabschnitt, dieser also mit einer Neigung um einen geringeren Winkel β. Damit kann jeweils ein drehachsenseitiges Ende des äußeren und des inneren Schneidenabschnitts tiefer liegen als das jeweils umfangseitige Ende, womit das erfindungsgemäße Fräswerkzeug eine ungestörte Kavität ausbildet.

Die Stirnschneide kann radial und in einer Draufsicht betrachtet weitgehend geradlinig verlaufen oder auf die Drehrichtung des Fräswerkzeugs bezogen, zumindest abschnittsweise konkav oder konvex gekrümmt sein. Vorzugsweise besteht sie aus dem äußeren und dem inneren Schneidenabschnitt, erschöpft sich also in ihrem Verlauf vom Umfang bis zur Drehachse hin in den genau zwei Schneidenabschnitten. Die Unterscheidung der Schneidenabschnitte voneinander liegt insbesondere in ihren unterschiedlichen Neigungen begründet, die an einem Knick in der Stirnschneide aufeinander treffen.

Die Erfindung wendet sich also insbesondere davon ab, eine zentrale Zentrierspitze vorzusehen, die filigran und daher bruchanfällig ist. Die Erfindung verfolgt vielmehr das Prinzip, mit dem äußeren und insbesondere mit dem inneren Schneidenabschnitt des rotierenden Fräswerkzeugs eine deutliche Kavität auszubilden. Der Erfindung ist nämlich die Erkenntnis zu verdanken, dass eine Zentrierwirkung eines Fräswerkzeugs auch damit zu erreichen ist, dass es eine stirnseitige quasi glockenförmige Kavität, Einbuchtung oder Ausnehmung als Zentriereinrichtung aufweist. Damit "saugt" sich das Fräswerkzeug gleichsam an das Werkstück und verhindert sein seitliches Verlaufen.

Der äußere Schneidenabschnitt kann aufgrund seiner geringeren Neigung grundsätzlich mit einem stumpfen Winkel an den inneren, stärker geneigten Schneidenabschnitt anschließen. Nach einer vorteilhaften Ausgestaltung der Erfindung kann der äußere Schneidenabschnitt in einer Ausrundung mit einem Radius in den inneren Schneidenabschnitt übergehen. Dadurch lässt sich ein kontinuierlicher und damit stabiler Übergang zwischen dem äußeren und dem inneren Schneidenabschnitt erzielen, der punktuelle Belastungsspitzen vermeidet und damit die Gefahr eines Bruchs des Fräswerkzeugs reduziert, was wiederum seiner Standzeit zugutekommt.

Grundsätzlich kann der äußere Schneidenabschnitt in einer Seiten- oder Schnittansicht konvex oder konkav gekrümmt sein. Nach einer weiteren vorteilhaften Weiterbildung der Erfindung kann der äußere Schneidenabschnitt in einer Schnittansicht parallel zur Drehachse und entlang der Stirnschneide betrachtet geradlinig verlaufen. Mit einem konvexen oder einem geradlinigen Verlauf lässt sich der Bereich des äußeren Schneidenabschnitts stabiler ausbilden, womit das Fräswerkzeug eine höhere Standzeit erreicht. Gegenüber dem konvexen Verlauf führt der geradlinige Verlauf zu einer größeren stirnseitigen Kavität.

Nach einer weiteren vorteilhaften Ausgestaltung der Erfindung kann der äußere Schneidenabschnitt in einem Winkel von 3° bis 10° von der Stirnseite weg geneigt sein, idealerweise in einem Winkel von 6° bis 8°. Die Neigung des äußeren Schneidenabschnitts definiert sich bei seinem geradlinigen Verlauf als Winkel des Verlaufs der Schneidkante des äußeren Schneidenabschnitts in einer achsparallelen Schnittansicht gesehen gegenüber der dann rechtwinklig geschnittenen Ebene der Stirnseite des Fräswerkzeugs. Bei einem gekrümmten Verlauf kann eine Sekante an die Stelle des geradlinigen Verlaufs des äußeren Schneidenabschnitts treten. In dem oben genannten Bereich lässt sich ein guter Kompromiss zwischen einem erwünschten Rücksprung einerseits, der für eine gewisse Mindesttiefe des Fräswerkzeugs sorgt, und einer möglichst hohen Stabilität des äußeren Schneidenabschnitts andererseits erreichen, der einer hohen Standzeit des Werkzeugs dient.

Die Stirnschneide des Fräswerkzeugs kann einen äußeren und einen inneren Schneidenabschnitt mit unterschiedlich zur Drehachse hin geneigten Schneidkanten aufweisen. Nach einer weiteren vorteilhaften Ausgestaltung der Erfindung kann sich der innere Schneidenabschnitt seinerseits aus mehreren Teilabschnitten mit jeweils unterschiedlichen Neigungen zueinander zusammensetzen. Statt in einer Krümmung kann der innere Schneidenabschnitt auch in einem Polygonzug aus aneinander gereihten Geradenabschnitten bestehen. Jeder drehachsennähere Teilabschnitt des inneren Schneidenabschnitts kann eine stärkere Neigung haben als jeder drehachsenentferntere Teilabschnitt. Zudem kann jeder Teilabschnitt des inneren Schneidenabschnitts eine stärkere Neigung haben als der äußere Schneidenabschnitt. Damit lässt sich eine glockenförmige Kavität aus einer Mehrzahl an geradlinigen Schneidenabschnitten und damit geometrisch verhältnismäßig einfach ausbilden.

Bei einer Ausbildung insbesondere des inneren Schneidenabschnitts des Fräswerkzeugs in der Form eines Polygonzugs stoßen die Teilabschnitte jeweils unter einem stumpfen Winkel aneinander an. Nach einer weiteren Ausgestaltung der Erfindung kann der innere Schneidenabschnitt einer Stirnschneide zumindest abschnittsweise ausgerundet sein. Je nach Geometrie des Fräswerkzeugs kann die Ausrundung konkav oder konvex sein. Die Ausrundung kann einen kontinuierlichen Übergang zwischen unterschiedlich geneigten geradlinigen Teilabschnitten erzeugen, der Belastungsspitzen vermeidet. Eine durchgehende Ausrundung als innerer Schneidenabschnitt führt zu jeweils unterschiedlichen Schneidwinkeln im Verlauf des inneren Schneidenabschnitts gegenüber der Werkzeugoberfläche, die wiederum unterschiedliche Belastungen im Schneidenverlauf bzw. eine gleichmäßige Verteilung der Schnittkräfte verursachen. Unterschiedliche Belastungen, insbesondere im Zuge desselben Schneidenabschnitts, verhindern ein Vibrieren des Fräsabschnitts, was zu einem ruhigen Lauf des Fräswerkzeugs führt. Ausbleibende Vibrationen sorgen außerdem für hohe Standzeiten des Werkzeugs und tragen zu einer guten Oberflächenqualität des bearbeiteten Werkstücks bei. Vorzugsweise ist der innere Schneidenabschnitt konkav ausgerundet. Die nach innenliegenden Radien bzw. konkaven Ausrundungen an der Stirnform sorgen für eine optimale Zentrierwirkung beim Eintauchen in ein zu bearbeitendes Material. Die Radien tragen auch zu einem optimalen Abfließen der Späne von der Stirn des Fräsabschnitts bei.

Wie oben bereits beschrieben, können die inneren Schneidenabschnitte auf der Drehachse in einem spitzen Winkel aufeinander treffen. Nach einer vorteilhaften Ausgestaltung der Erfindung können die inneren Schneidenabschnitte mehrerer Stirnschneiden im Bereich der Drehachse in einer Rundung ineinander übergehen. Bei einem konkaven Verlauf der inneren Schneidenabschnitte kann die Rundung diese fortsetzend ebenfalls konkav ausgebildet sein. Unabhängig davon kann die Rundung aber insbesondere auch konkav gestaltete innere Schneidenabschnitte konvex ineinander übergehen lassen. Dazu können die inneren Schneidenabschnitte aus geometrischen oder Herstellungsgründen auf einem kurzen Teilabschnitt zur Drehachse hin ansteigen. Die konvexe Rundung verbindet die Anstiege und vermeidet die Ausbildung einer empfindlichen Spitze, womit das Fräswerkzeug stabiler ausgebildet werden kann. Damit können die inneren Schneidenabschnitte weit genug auseinander liegen, um mit einer großen Kavität im Fräswerkzeug einen beträchtlichen Abtrag bieten zu können.

Nach einer dazu alternativen Ausgestaltung der Erfindung können die inneren Schneidenabschnitte mehrerer Stirnschneiden - egal ob sie geradlinig oder konvex oder konkav gekrümmt ausgebildet sind - im Bereich der Drehachse in einem waagrechten Plateau ineinander übergehen, das sich rechtwinklig zur Drehachse erstreckt. Auch das Plateau lässt sich kostengünstig herstellen und engt die geometrischen Verhältnisse der inneren Stirnschneiden, insbesondere deren Radien und deren Neigung, nicht ein. Die inneren Schneidenabschnitte gehen vorzugsweise mit einem Radius in das Plateau über, um Belastungsspitzen zu vermeiden.

Zwischen den Stirnschneiden des Fräswerkzeugs beginnen stirnseitig Spanabführrillen zum Abtransport von aus dem Werkstück herausgearbeiteten Metallspänen. Mit ihnen lässt sich auch die bei der Bearbeitung entstehende Wärme ableiten. Daher und um Beeinträchtigungen der Werkstückoberfläche durch Späne zu vermeiden, ist eine zügige Spanabfuhr erwünscht. Nach einer weiteren vorteilhaften Ausgestaltung der Erfindung kann das Fräswerkzeug eine Stirnausspitzung aufweisen, die ausgehend von der Stirnseite in einem auf den Schaftabschnitt des Fräswerkzeugs hin in einem Schraubengang verlaufende Spanabführkanal mündet, wobei zwei ineinander übergehende und damit grundsätzlich nebeneinander liegende Ausspitzungen axial hintereinander liegen. Damit lässt sich eine zuverlässige Spanabfuhr aus der Kavität des Fräswerkzeugs erzielen.

Nach einer weiteren vorteilhaften Ausgestaltungsform kann die Stirnausspitzung einen Ausspitzungswinkel gegenüber der Stirnseite von 35° bis 70°, vorzugsweise von 45° bis 60°, einschließen. Bei diesem Winkel ist eine besonders erfolgreiche Spanabfuhr zu erwarten.

Zum Beispiel aus Gründen der Wärmeabfuhr kann am Fräswerkzeug ein Kühl- und/oder Schmiermittel eingesetzt werden. Nach einer weiteren vorteilhaften Ausgestaltung der Erfindung kann das Fräswerkzeug einen in der Stirnseite mündenden Kühl- und/oder Schmiermittelkanal aufweisen, dessen Mündungsöffnung vorzugsweise konzentrisch zur Drehachse liegt. Damit ist es möglich, ein Fräswerkzeug zu bieten, das einerseits unter Verwendung eines axial zugeführten Kühl- und/oder Schmiermittels eingesetzt werden kann, das aber andererseits auch eine Zentrierwirkung des Fräswerkzeugs gegenüber dem Werkstück bietet. Die zentrische Anordnung der Mündungsöffnung des Kühl- und/oder Schmiermittelkanals ist nur möglich, weil die Zentrierwirkung erfindungsgemäß nicht von einem zentralen Abschnitt des Fräswerkzeugs ausgeht, sondern von der besonderen Gestaltung seiner Stirnschneiden und der damit ausgebildeten stirnseitigen Kavität oder Einbuchtung.

Anders als bei bekannten Fräswerkzeugen mit einem zentralen Kühl- und/oder Schmiermittelkanal, die zwischen seiner stirnseitigen Mündungsöffnung und dem drehachsenseitigen Ende der Stirnschneiden einen Abstand bzw. eine Freifläche vorsehen, kann die Stirnschneide erfindungsgemäß möglichst nah an die Mündungsöffnung des Kühl- und/oder Schmiermittelkanals herangeführt sein, vorzugsweise unmittelbar an ihr anschließen. Denn Untersuchungen des Erfinders haben ergeben, dass bei einem ausreichend kleinen Durchmesser der Mündungsöffnung bzw. eines schneidenfreien Zentrums im Verhältnis zum Werkzeugdurchmesser ein Restmaterial des Werkstücks im Bereich des schneidenfreien Zentrums weggerissen wird. Damit lässt sich die Stirnseite des Fräswerkzeugs mit längeren Stirnschneiden ausstatten, was die Effizienz des Fräswerkzeugs steigert.

Nach einer weiteren vorteilhaften Ausgestaltungsform des obigen Fräswerkzeugs kann der Verlauf der Stirnschneide in einem der Drehachse nahen Spanleitabschnitt mit dem Radius des Fräsabschnitts einen sich zur Drehachse hin öffnenden Spanleitwinkel einschließen, wie ihn die parallele Anmeldung mit der Anmeldenummer P07034 desselben Anmelders mit demselben Anmeldetag wie die vorliegende offenbart. Ihr diesbezüglicher Inhalt wird auch zum Inhalt der vorliegenden Anmeldung gemacht. Demnach kann außerdem der Spanleitabschnitt von der Stirnfläche weg mit einer Spanleitstufe in die Mündungsöffnung übergehen. Der Spanleitabschnitt kann darüber hinaus in einem Spanleitwinkel ϕ zwischen 15° bis 25° verlaufen, seine Länge und eine Höhe seiner Spanleitstufe können jeweils etwa 3% bis 10% des Durchmessers des Fräsabschnitts annehmen.

Das Prinzip der Erfindung wird im Folgenden anhand der Zeichnung beispielhaft noch näher erläutert. In der Zeichnung zeigen:
- Figur 1: eine perspektivische Ansicht einer ersten Ausführungsform des erfindungsgemäßen Fräswerkzeugs,
- Figur 2: eine Seitenansicht und
- Figur 3: eine Draufsicht des Fräswerkzeugs gemäß Figur 1,
- Figur 4: eine Seitenansicht einer zweiten Ausführungsform des erfindungsgemäßen Fräswerkzeugs, und
- Figur 5: eine Draufsicht auf die zweite Ausführungsform.

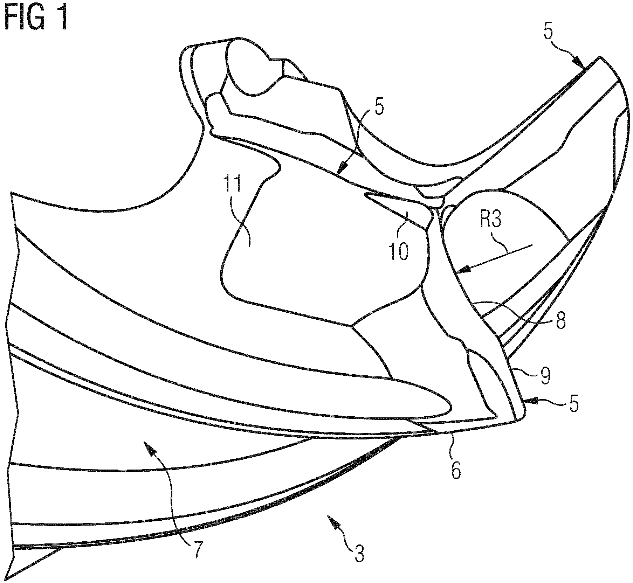

Die erste Ausführungsform des erfindungsgemäßen Fräswerkzeugs wird ausgehend von Figur 1 anhand der drei Figuren gemeinsam beschrieben:

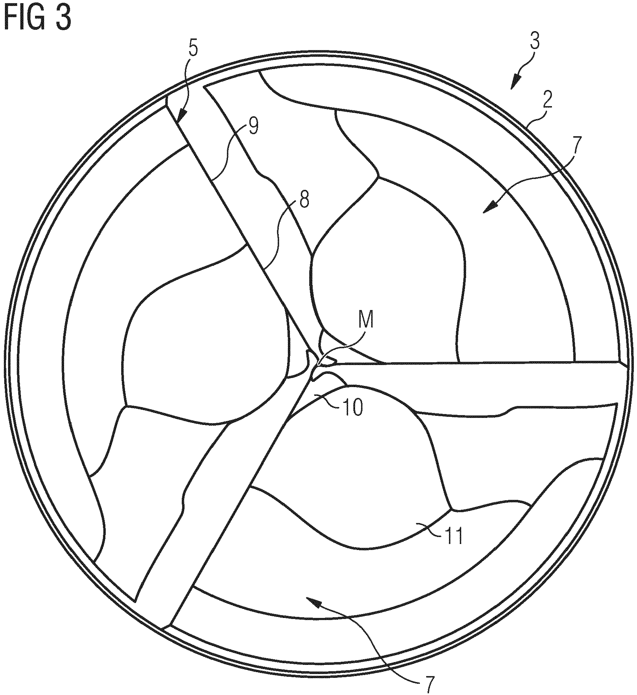

Figur 1 bietet eine perspektivische Ansicht eines Abschnitts eines erfindungsgemäßen Fräswerkzeugs. Es besitzt einen im Wesentlichen drehzylindrischen Grundkörper 1 mit einer Drehachse M (nur Figur 3), dessen endseitiger Fräsabschnitt 3 zu sehen ist. Am gegenüberliegenden und nicht dargestellten anderen Ende des Fräswerkzeugs befindet sich ein an sich bekannter Schaftabschnitt zum Einspannen des Fräswerkzeugs in einer Bearbeitungsmaschine.

Das Fräswerkzeug richtet seine Stirnseite 4 zum Betrachter, sodass drei sternförmig und mit jeweils gleichem Abstand zueinander angeordnete Stirnschneiden 5 erkennbar sind, die von der zentralen Drehachse aus radial und weitgehend geradlinig zum Umfang verlaufen. Jede Stirnschneide 5 geht in eine umfangseitige Frässchneide 6 über, die sich in einem Schraubengang axial in die Richtung des nicht dargestellten Schaftabschnitts erstreckt. Jeder Stirnschneide 5 ist ein ebenfalls sich in Achsrichtung schraubenförmig verlaufender Spanabführkanal 7 zugeordnet, der radial in den Grundkörper 1 einschneidet.

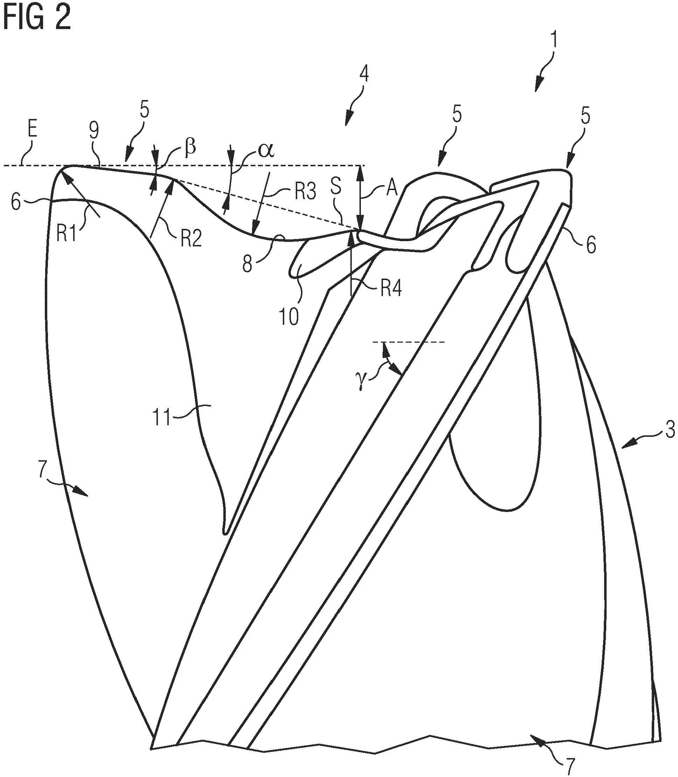

Die drei Stirnschneiden 5 verfügen jeweils über einen inneren, der Drehachse näher liegenden Schneidenabschnitt 8 und über einen äußeren, der Drehachse ferner liegenden Schneidenabschnitt 9. Jeder äußere Schneidenabschnitt 9 reicht bis zum Umfang hin, wo er mit einer Ausrundung R1 in die umfangseitige Frässchneide 6 übergeht (Figur 2). Sein Verlauf ist in der vorliegenden Ausführungsform sowohl in der Seitenansicht der Figur 2 als auch in der Draufsicht der Figur 3 weitgehend geradlinig, kann aber auch geschwungen bzw. gekrümmt verlaufen. Mit einer stirnseitigen Ebene E, auf der die Drehachse des Fräswerkzeugs senkrecht steht, schließen die äußeren Schneidenabschnitte 9 einen Winkel β von etwa 7° ein (Figur 2), sodass sie in Richtung auf die Drehachse hin nach innen geneigt sind. Sie gehen mit einer Ausrundung R2 in die inneren Schneidenabschnitte 8 über. Damit ergibt sich ein kontinuierlicher und insbesondere kantenfreier Übergang jeder Stirnschneide 5 von ihrem äußeren Schneidenabschnitt 9 zu ihrem inneren Schneidenabschnitt 8, der einer hohen Lebensdauer des Fräswerkzeugs dient.

Jeder innere Schneidenabschnitt 8 erstreckt sich in einer Draufsicht weitgehend geradlinig bis zur Drehachse hin, wo er auf die inneren Schneidenabschnitte 8 der anderen Stirnschneiden 5 trifft, geometrisch im Mittelpunkt M (Figur 3). Auch der innere Schneidenabschnitt 8 kann in einer anderen Ausführungsform grundsätzlich gekrümmt verlaufen. Die Seitenansicht der Figur 2 lässt eine Ausrundung R3 des inneren Schneidenabschnitts 8 erkennen, die sich von der Stirnseite 4 weg und zum nicht dargestellten Schaftabschnitt hin wölbt, also konkav ist. Sie steigt zur Drehachse hin leicht an, um in einer entgegengesetzten, also konvexen Ausrundung R4 in den inneren Schneidenabschnitt 8 einer anderen Stirnschneide 5 überzugehen. Eine mittlere Neigung des inneren Schneidenabschnitts 8 lässt sich durch eine Sehne S von einem jeweiligen Scheitelpunkt der Ausrundungen R2 und R4 beschreiben. Die Sehne S schließt demnach mit der Ebene E einen Winkel α ein, der größer ist als der Winkel β, der die Neigung des äußeren Schneidenabschnitts 9 beschreibt. Jedes drehachsenseitige Ende, nämlich bei der Ausrundung R2 für den äußeren Schneidenabschnitt 9 und bei der Ausrundung R4 für den inneren Schneidenabschnitt 8, liegt damit tiefer als das jeweils umfangseitige Ende, dieses liegt bei der Ausrundung R1 für den äußeren Schneidenabschnitt 9 und bei der Ausrundung R2 für den inneren Schneidenabschnitt 8. Damit lässt sich eine rotationssymmetrische Kavität des Fräswerkzeugs wie eine flache Glocke erreichen.

Der höchste Punkt der Ausrundung R4 liegt auf der Drehachse und hat einen Abstand A von der Ebene E, der bei weicheren Werkstücken größer und bei härteren Materialien geringer gewählt werden kann. An die Ausrundung R4 und in einer Richtung radial auswärts schließen im Bereich jedes Spanabführkanals 7 Ausspitzungen 9, 10 an. Sie stellen räumlich mehrachsig gekrümmte Flächen mit einem unregelmäßig geformten Umriss dar, die mit einer unterschiedlichen radialen Hauptneigung in die Spanabführkanäle 7 münden. Sie schließen in radialer wie in axialer Richtung unmittelbar aneinander an. Die kleinere Stirnausspitzung 10 hat eine geringere Hauptneigung als die größere Ausspitzung 11 und geht unmittelbar in jene über. Damit dienen sie einer zügigen Spanabfuhr zwischen den Stirnschneiden.

Der Ausspitzungswinkel γ des Fräsabschnitts 3 beträgt etwa 55° gegenüber der Ebene E.

Das Fräswerkzeug lässt sich insbesondere als Tauchfräser zum Herstellen von Ausnehmungen vielerlei Art einsetzen. Dazu wird das rotierende Fräswerkzeug zunächst axial auf eine Werkstückoberfläche hinein in das zu bearbeitende Material hinein eingetaucht. Nach einer kurzen axialen Distanz wird ein bekanntes Fräswerkzeug üblicherweise nun zumindest zusätzlich auch seitlich verfahren, um keinen Spänestau zwischen den Stirnschneiden und in den Spanabfuhrkanälen zu verursachen. Das erfindungsgemäße Fräswerkzeug dagegen erlaubt ein axiales Eintauchen, wobei die oben beschriebene glockenförmige Geometrie der stirnseitigen Einbuchtung bzw. Kavität dem rotierenden Fräswerkzeug bei bestimmungsgemäßem Kontakt mit dem Werkstück eine hohe Stabilität und sehr gute Zentriereigenschaften verleiht.

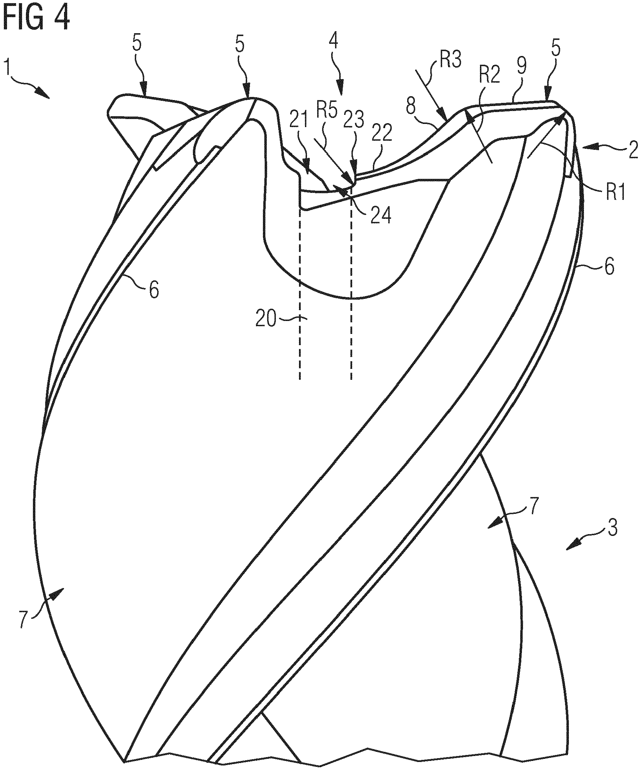

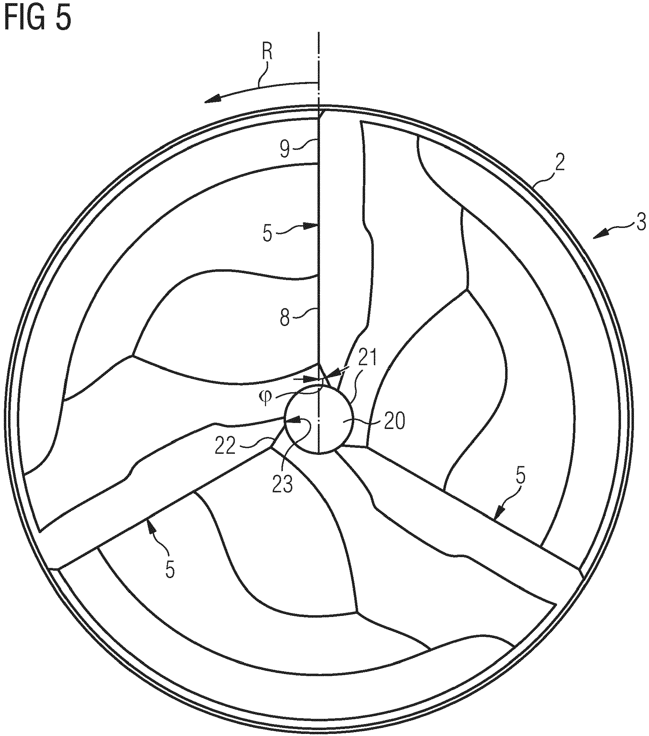

Die Figuren 4 und 5 zeigen zwei Ansichten einer zweiten Ausführungsform des erfindungsgemäßen Fräswerkzeugs. Die mit der ersten Ausführungsform gemäß den Figuren 1 bis 3 prinzipiell übereinstimmenden Merkmale sind mit denselben Bezugszeichen wie dort bezeichnet.

Figur 5 zeigt eine Draufsicht auf eine Stirnseite 4 (nur Figur 4) der zweiten Ausführungsform. Übereinstimmend mit der ersten Ausführungsform verfügt sie über einen drehzylindrischen Grundkörper 1 mit einer Drehachse, über einen Fräsabschnitt 3 an dessen erstem Ende und über einen Schaftabschnitt am anderen Ende, über drei sternförmig angeordnete Stirnschneiden 5, die von der zentralen Drehachse aus radial und weitgehend geradlinig zum Umfang 2 hin verlaufen. Sie gehen in die Umfangsschneiden 6 über, zwischen denen die Spanabführkanäle 7 verlaufen.

Die drei Stirnschneiden 5 verfügen ebenfalls über innere Schneidenabschnitte 8 und über äußere Schneidenabschnitt 9. Ihre geometrische Gestaltung entspricht weitgehend derjenigen der ersten Ausführungsform.

Im Unterschied zur ersten Ausführungsform verlaufen zumindest die inneren Schneidenabschnitte 8 stärker geneigt zur Drehachse hin. Damit ergibt sich eine voluminösere Kavität an der Stirnseite 4 des Fräswerkzeugs. Den wesentlichen Unterschied der zweiten Ausführungsform gegenüber der ersten aber bildet ein in der Drehachse liegender Kühl- und/oder Schmiermittelkanal 20, dessen Mündungsöffnung 21 sich konzentrisch in der Stirnseite 4 des Fräsabschnitts 3 befindet. Er bildet einen zentralen schneidenfreien Bereich des Fräswerkzeugs. Deshalb bietet die zweite Ausführungsform eine weitere Abweichung: Kurz vor Erreichen der Mündungsöffnung 21 knickt der innere Schneidenabschnitt 8 in einem kurzen Spanleitabschnitt 22 ab. Der in der Draufsicht weitgehend geradlinige Spanleitabschnitt 22 stellt den drehachsennächsten Abschnitt des inneren Schneidenabschnitts 8 dar und schließt somit mit dem Radius des Fräsabschnitts 3 einen Spanleitwinkel ϕ ein, der in einem Bereich von etwa 10° bis 30° liegen kann und beispielsweise etwa 20° beträgt.

Die Seitenansicht der Figur 4 verdeutlicht außerdem, dass der Spanleitabschnitt 22 unter Ausbilden einer Spanleitstufe 23 an der Mündungsöffnung 21 endet. Der Spanleitabschnitt 22 geht also nicht kontinuierlich, zum Beispiel in einer konvexen Ausrundung oder auf eine Höhe von Null abnehmend in die Mündungsöffnung 21 über, sondern bildet im Bereich des Umfangs der Mündungsöffnung 21 eine radial nach innen weisende Bruchkante aus. Außerdem schafft sie im Einsatz des Fräswerkzeugs einen Verdrängungsraum 24 zwischen der Werkstückoberfläche und der Mündungsöffnung 21, sodass ein Austritt von Kühl- und/oder Schmiermittel sichergestellt und Platz für Materialspäne bleibt. Lediglich an ihrem Bodenabschnitt ist die Spanleitstufe 22 mit einer Ausrundung R5 gegenüber der Mündungsöffnung 21 versehen, um dort Belastungsspitzen zu vermeiden.

Das Fräswerkzeug lässt sich insbesondere als Tauchfräser zum Herstellen von Ausnehmungen vielerlei Art einsetzen. Dazu wird das rotierende Fräswerkzeug zunächst axial auf eine Werkstückoberfläche in das zu bearbeitende Material hinein eingetaucht. Nach einer kurzen axialen Distanz wird das Fräswerkzeug üblicherweise nun zumindest zusätzlich auch seitlich verfahren, um keinen Spänestau in den Spanabfuhrkanälen, aber insbesondere auch an der Mündungsöffnung des Kanals für das Kühl- und/oder Schmiermittel zu erzeugen. Das erfindungsgemäße Fräswerkzeug jedoch lässt eine fortgesetzte oder ausschließlich axiale Werkzeugfahrt in das Material hinein zu, ohne dass es zu einem Spänestau oder einem Stehenbleiben von Restmaterial im schneidenfreien Bereich der Mündungsöffnung 21 käme. Denn die Stirnschneiden 5 sorgen in ihrem umfangsnahen und ihrem mittleren Bereich für einen guten Abtransport der abgescherten Späne in die Spanabführkanäle 7.

Im drehachsennahen Bereich wirkt nun der Spanleitabschnitt 22: Auch er schert zunächst in an sich bekannter Weise Späne vom Material ab. Die Spanleitstufe 23 sorgt für ein zuverlässiges Abbrechen jedes Spans vom Restmaterial. Aufgrund seines gegenüber der übrigen Stirnschneide 5 in der Draufsicht abgewinkelten Verlaufs drängt der Spanleitabschnitt 22 jeden abgescherten Span aber zunächst in den Verdrängungsraum 24 in Richtung der Drehachse, und zwar in einen Richtungsbereich zwischen einer radialen und einer tangentialen Richtung. Er drängt den Span also in denjenigen Bereich, in dem das Fräswerkzeug keine Schneide besitzt. Zusammen mit den Spanleitabschnitten 22 der weiteren Stirnschneiden 5 entsteht so eine scherende und zusätzlich tordierende Kraft auf das Restmaterial, so dass es mit- und abgerissen wird. Zusammen mit den übrigen Spänen wird es unter der Wirkung der Fliehkraft und des Drucks des Kühl- und/oder Schmiermittels radial nach außen Richtung Umfang 2 und damit in die Spanabführkanäle 7 transportiert.

Durch das erfolgreiche Abscheren von Material, das sich im schneidenfreien Bereich 21 des Fräsabschnitts 3 befindet, lässt sich das erfindungsgemäße Fräswerkzeug quasi wie ein Bohrer zum ausschließlich senkrechten Fräsen von kreisrunden Sacklöchern oder Durchbrüchen verwenden. Da keine schrauben- oder helixförmige Führung des erfindungsgemäßen Fräswerkzeugs beim Fräsen zum Beispiel eines Sacklochs mehr erforderlich ist, kann für die Herstellung eines bestimmten Durchmessers des Sacklochs zudem ein erfindungsgemäßes Fräswerkzeug desselben Durchmessers verwendet werden. Der Entfall einer schraubenförmigen Führung des Werkzeugs und die Entsprechung von Werkzeugdurchmesser und Durchmesser des Sacklochs erleichtert die Bearbeitung von Werkstücken erheblich.

Es wird abschließend noch einmal darauf hingewiesen, dass es sich bei den vorhergehend detailliert beschriebenen Vorrichtungen lediglich um Ausführungsbeispiele handelt, die vom Fachmann in verschiedenster Weise modifiziert werden können, ohne den Bereich der Erfindung zu verlassen. So können die Verläufe der inneren und der äußeren Schneidenabschnitte und/oder des Spanleitabschnitts in einer Seitenansicht und/oder in einer Draufsicht auch jeweils gekrümmt oder geradlinig verlaufen, andere Neigungswinkel vorliegen und/oder eine andere Schneidenanzahl gewählt werden. Außerdem schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Grundkörper
- 2: Umfang
- 3: Fräsabschnitt
- 4: Stirnseite
- 5: Stirnschneide
- 6: Umfangsschneide
- 7: Spanabführkanal
- 8: innerer Schneidenabschnitt
- 9: äußerer Schneidenabschnitt
- 10: Ausspitzung
- 11: Ausspitzung

- 20: Kühl- und/oder Schmiermittelkanal
- 21: Mündungsöffnung
- 22: Spanleitabschnitt
- 23: Spanleitstufe
- 24: Verdrängungsraum

- A: Abstand
- E: Ebene
- M: Mittelpunkt, Drehachse
- R: Drehrichtung
- S: Sehne
- R1 ...R5: Ausrundung

- α: Neigungswinkel
- β: Neigungswinkel
- γ: Ausspitzungswinkel
- ϕ: Spanleitwinkel

## Patentansprüche

1. Fräswerkzeug
- mit einem im Wesentlichen zylindrischen Grundkörper (1) mit einer Drehachse (M),
- mit einem bis zu einem ersten Ende des Fräswerkzeugs reichenden Schaftabschnitt zum Einspannen des Fräswerkzeugs in einer Bearbeitungsmaschine,
- mit einem bis zu einem gegenüberliegenden zweiten Ende des Fräswerkzeugs reichenden Fräsabschnitt (3),
- mit einer Stirnseite (4) des Fräsabschnitts (3),
- die mindestens eine von der Drehachse (M) zum Umfang verlaufende Stirnschneide (5) aufweist,
- mit einem der Drehachse näher liegenden inneren Schneidenabschnitt (8) der Stirnschneide (5), und
- mit einem der Drehachse ferner liegenden äußeren Schneidenabschnitt (9) der Stirnschneide (5),
- wobei der innere Schneidenabschnitt (8) zur Drehachse hin stärker abfällt als der äußere Schneidenabschnitt (9), und
- wobei der äußere Schneidenabschnitt (9) mit einem Radius (R2) in den inneren Schneidenabschnitt (8) übergeht.

2. Fräswerkzeug nach Anspruch 1, wobei der äußere Schneidenabschnitt (9) in einer Schnittansicht geradlinig verläuft.

3. Fräswerkzeug nach einem der obigen Ansprüche, wobei der äußere Schneidenabschnitt (9) in einem Winkel (β) von 3° bis 10° von der Stirnseite (4) weg geneigt ist.

4. Fräswerkzeug nach einem der obigen Ansprüche, wobei sich der innere Schneidenabschnitt (8) aus mehreren Teilabschnitten mit jeweils unterschiedlichen Neigungen zueinander zusammensetzt.

5. Fräswerkzeug nach einem der obigen Ansprüche, wobei der innere Schneidenabschnitt (8) zumindest abschnittsweise ausgerundet ist.

6. Fräswerkzeug nach Anspruch 5, wobei die inneren Schneidenabschnitte (8) mehrerer Stirnschneiden (5) im Bereich der Drehachse in einer Rundung (R4) ineinander übergehen.

7. Fräswerkzeug nach Anspruch 5, wobei die inneren Schneidenabschnitte (8) mehrerer Stirnschneiden (5) im Bereich der Drehachse (M) in einem waagrechten Plateau ineinander übergehen.

8. Fräswerkzeug nach einem der obigen Ansprüche, mit einer Ausspitzung (10), die ausgehend von der Stirnschneide (5) in einem auf den Schaftabschnitt des Fräswerkzeugs hin in einem Schraubengang verlaufenden Spanabführkanal (7) mündet, wobei zwei ineinander übergehende Ausspitzungen (10, 11) axial hintereinander liegen.

9. Fräswerkzeug nach einem der obigen Ansprüche, mit einem Ausspitzungswinkel (γ) gegenüber der Stirnfläche (4) von 45° bis 60°.

10. Fräswerkzeug nach einem der obigen Ansprüche, mit einem in der Stirnseite (4) mündenden Kühl- und/oder Schmiermittelkanal (20), dessen Mündungsöffnung (21) konzentrisch zur Drehachse liegt.

11. Fräswerkzeug nach dem obigen Anspruch, wobei der Verlauf der Stirnschneide (5) in einem der Drehachse nahen Spanleitabschnitt (22) mit dem Radius einen sich zur Drehachse hin öffnenden Spanleitwinkel (ϕ) einschließt.
